# EUROPEAN PATENT APPLICATION

(11) **EP 4 336 630 A1**
(43) Date of publication of application: **13.03.2024**
(21) Application number: 23812054.7
(22) Date of filing: 16.05.2023
(51) Int. Cl.: H01M 50/103, H01M 50/119, H01M 10/659, H01M 10/647, H01M 10/613, H01M 10/6569

(54) **SECONDARY BATTERY HAVING ENHANCED SAFETY**

(30) Priority: 27.05.2022 KR 20220065161
(71) Applicant: LG Energy Solution, Ltd., Seoul 07335 (KR)
(72) Inventor: PARK, Ji Min, Daejeon 34122 (KR); SUNG, Joo Hwan, Daejeon 34122 (KR); JUNG, Kyung Hwan, Daejeon 34122 (KR)
(74) Representative: Goddar, Heinz J.
(86) International application number: PCT/KR2023/006594
(87) International publication number: WO 2023/229280

(57) **Abstract**

The disclosed technology relates to a prismatic secondary battery including a housing made of a metal and having a hexahedral shape, and one or more electrode assemblies inserted through an open surface formed at an upper surface of the housing and accommodated in the housing. In an example, a concave surface is formed in at least one surface of a front surface or a rear surface of the housing, the one or more electrode assemblies are supported by contacting the concave surface in the housing, and an insertion end portion of the one or more electrode assemblies have a wedge shape.

## Description

### [Cross-Reference to Related Applications]

This application is a National Phase entry of International Application No. PCT/KR2023/006594, filed on May 16, 2023, and claims the benefit of and priority to Korean Patent Application No. 10-2022-0065161, filed on May 27, 2022, the disclosures of which are incorporated by reference in their entirety for all purposes as if fully set forth herein.

### [Technical Field]

The present disclosure relates to a secondary battery, and more specifically, relates to a secondary battery capable of preventing the shaking of an electrode assembly accommodated in a housing and suppressing the deformation of the housing due to swelling of the electrode assembly.

### [Background]

Secondary batteries are rechargeable unlike primary batteries and are being researched and developed a lot due to their compact size and high capacity potential. The demand for secondary batteries as energy sources is increasing more rapidly due to technology development and an increase in demand for mobile devices and also due to electric vehicles and energy storage systems that are emerging in line with the needs of the times for environmental protection.

Secondary batteries are classified into coin type batteries, cylindrical type batteries, prismatic type batteries, and pouch type batteries according to the shape of a battery case. In such a secondary battery, an electrode assembly mounted in a battery case is a chargeable or dischargeable power generating device having a structure in which an electrode and a separator are stacked.

An electrode assembly may be roughly classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack type electrode assembly in which a plurality of positive and negative electrodes with a separator interposed therebetween are sequentially stacked, and a stack/folding type electrode assembly in which stack type unit cells are wound with a separator film having a long length.

In prismatic secondary batteries, since an electrode assembly is enclosed in a metal case, a certain space is required for electrical connection between an electrode tab and an electrode terminal of an electrode assembly. Due to such a space, the electrode assembly shakes within the case. When prismatic secondary batteries are used in a stable environment, the shaking of an electrode assembly is not a severe problem. However, when prismatic secondary batteries are used in an environment with severe vibrations, as in electric vehicles, the shaking of an electrode assembly may cause a severe problem in terms of safety. For example, due to stress repeatedly acting on an electrode tab, the electrode tab may be shortcircuited to end the lifetime of a secondary battery, or an internal short circuit may occur to cause a fire or explosion.

In addition, a swelling phenomenon that occurs when a secondary battery is used for a long time may cause a prismatic secondary battery to gradually swell and deform, and such deformation of a case also adversely affects safety.

Therefore, in order to maintain the safety of a secondary battery for a long time, there is a need for an effective method capable of preventing the shaking of an electrode assembly.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### [Summary]

### [Technical Problem]

An object of the present disclosure is to satisfactorily maintain the safety of a prismatic secondary battery for a long time by preventing the occurrence of various problems caused by the shaking of an electrode assembly accommodated inside the prismatic secondary battery.

However, the technical objects to be solved by the present disclosure are not limited to the above-described object, and other objects not described herein will be clearly understood by those skilled in the art from the following descriptions of the present disclosure.

### [Technical Solution]

According to the present disclosure, there is provided a prismatic secondary battery, including: a housing made of a metal and having a hexahedral shape; and one or more electrode assemblies inserted through an open surface formed at an upper surface of the housing and accommodated in the housing. In an example, a concave surface may be formed in at least one surface of a front surface or a rear surface of the housing, wherein the one or more electrode assemblies may be supported by contacting the concave surface in the housing, and wherein an insertion end portion of the one or more electrode assemblies may have a wedge shape.

The concave surface may be formed along a width direction or a height direction of the housing.

The concave surface may be continuously formed from one end to the other end of the housing.

The concave surface may be formed curved or flat.

The concave surface may be connected to both ends in the height direction or in the width direction of the housing, which intersects a direction in which the concave surface extends, as a curved surface or a flat surface.

The concave surface may be formed as a stepped surface.

The concave surface may be formed in a central portion of at least one surface of the front surface or the rear surface of the housing. In this case, the concave surface may be connected to an edge of the housing through a continuous inclined surface.

The insertion end portion of the one or more electrode assemblies may not be in contact with the concave surface.

The prismatic secondary battery may further include a heat absorber disposed in a space formed by the concave surface.

An exterior material of the heat absorber may be a pouch, and the pouch may seal an absorbent material impregnated with a liquid that absorbs external heat and is vaporized.

The absorbent material may include a super absorbent matrix, for example, a super absorbent polymer (SAP) or a super absorbent fiber (SAF).

### [Advantageous Effects]

According to a prismatic secondary battery of the present disclosure having the configuration described above, since an electrode assembly is supported by contact with a concave surface formed in a housing, various problems such as damage to an electrode tab caused by the movement of an electrode assembly in the housing are prevented.

In addition, according to a prismatic secondary battery of the present disclosure, even when a swelling phenomenon in which an electrode assembly swells occurs, the deformation of a housing having improved structural rigidity due to a concave surface is suppressed, thereby improving the safety of the prismatic secondary battery.

In an electrode assembly included in a prismatic secondary battery of the present disclosure, since an insertion end portion has a wedge shape, the risk that the electrode assembly is damaged by a concave surface when the electrode assembly is inserted into a housing is considerably reduced, and thus the structure of the electrode assembly also considerably improves the safety of the prismatic secondary battery.

Also, by using a space of a concave surface formed on a front and/or rear surface of a prismatic secondary battery, a heat absorber may be disposed in the space to smoothly cool the prismatic secondary battery, and thus, in the present disclosure, effective cooling can be achieved without additionally providing a separate cooling space.

However, the technical effects obtainable through the present disclosure are not limited to the above-described effects, and other effects not described herein will be clearly understood by those skilled in the art from the following descriptions of the present disclosure.

### [Brief Description of the Drawings]

The accompanying drawings illustrate exemplary embodiments of the present disclosure and, together with the detailed description of the present disclosure, serve to provide further understanding of the technical spirit of the present disclosure. However, the present disclosure is not to be construed as being limited to the drawings.
FIG. 1 is an exploded perspective view of a prismatic secondary battery according to the present disclosure.
FIG. 2 is a cross-sectional view illustrating the prismatic secondary battery along cutting line A-A of FIG. 1.
FIG. 3 is a view illustrating another embodiment in which a concave surface is formed in a width direction of a housing.
FIGS. 4 and 5 are views illustrating an embodiment in which a concave surface is formed in a width direction of a housing.
FIG. 6 is a view illustrating one embodiment of a concave surface formed as a stepped surface.
FIG. 7 is a view illustrating one embodiment of a concave surface formed in a central portion of a housing.
FIG. 8 is a view illustrating an embodiment including a heat absorber.

### [Detailed Description]

Since the present disclosure may be variously changed and have various embodiments, specific embodiments will be described in detail below.

However, it should be understood that there is no intention to limit the present disclosure to particular embodiments, and on the contrary, the present disclosure is to cover all modifications, equivalents, and alternatives falling within the spirit and scope of the present disclosure.

In this application, it should be understood that terms such as "include" and "have" are intended to indicate the presence of a feature, number, step, operation, component, part, or a combination thereof described in the specification, and they do not preclude the possibility of the presence or addition of one or more other features or numbers, steps, operations, components, parts or combinations thereof.

Also, when a first portion such as a layer, a film, an area, a plate, etc. is referred to as being "on" a second portion, this includes not only the case where the first portion is "directly on" the second portion, but also the case where a third portion is interposed therebetween. On the other hand, when a first portion such as a layer, a film, an area, a plate, etc. is referred to as being "under" a second portion, this includes not only the case where the first portion is "directly under" the second portion, but also the case where a third portion is interposed therebetween. In addition, to be disposed "on" in the present application may include the case of being disposed at the bottom as well as the top.

The present disclosure relates to a prismatic secondary battery including a housing made of a metal and having a hexahedral shape, and one or more electrode assemblies inserted through an open surface formed at an upper surface of the housing and accommodated in the housing.

In the prismatic secondary battery of the present disclosure, in an example, a concave surface is formed in at least one surface of a front surface and a rear surface of the housing. The electrode assembly is supported by contact with the concave surface, and an insertion end portion of the electrode assembly has a wedge shape.

In the prismatic secondary battery of the present disclosure, due to such a configuration, since the electrode assembly is supported by contact with the concave surface formed in the housing, various problems such as damage to an electrode tab caused by the movement of the electrode assembly in the housing are prevented.

In addition, even when a swelling phenomenon in which the electrode assembly swells occurs, the deformation of the housing having improved structural rigidity due to the concave surface is suppressed, thereby improving the safety of the prismatic secondary battery.

In the electrode assembly included in the prismatic secondary battery of the present disclosure, since the insertion end portion has a wedge shape, the risk that the electrode assembly is damaged by the concave surface when the electrode assembly is inserted into the housing is considerably reduced, and thus the structure of the electrode assembly also considerably improves the safety of the prismatic secondary battery.

### [Modes for Carrying Out the Invention]

Hereinafter, specific embodiments of a prismatic secondary battery of the present disclosure will be described with reference to the accompanying drawings. For reference, front and rear directions or up, down, left, and right directions for designating relative positions used in the following descriptions are intended to help the understanding of the present disclosure and are based on directions shown in the drawings unless otherwise specified.

### [First embodiment]

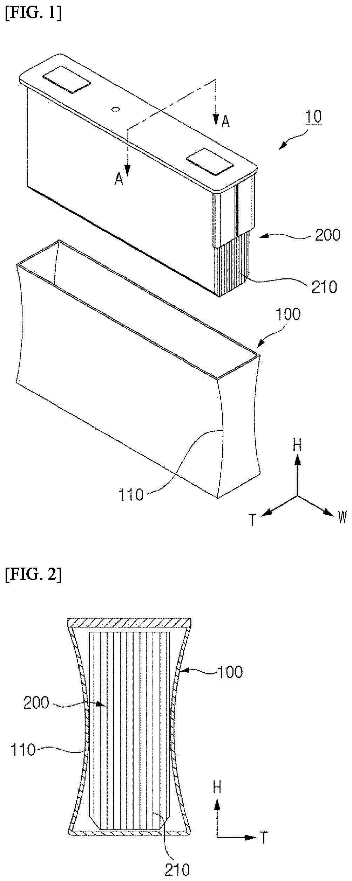

FIG. 1 is an exploded perspective view of a prismatic secondary battery 10 according to the present disclosure. FIG. 2 is a cross-sectional view illustrating the prismatic secondary battery 10 along cutting line A-A of FIG. 1.

The prismatic secondary battery 10 of the present disclosure includes a housing 100 made of a metal and having a hexahedral shape, and one or more electrode assemblies 200 inserted through an open surface formed at an upper surface of the housing 100 and accommodated therein

Here, in the structures of the housing 100 and the electrode assembly 200 of the prismatic secondary battery 10 of the present disclosure, a concave surface 110 is formed in at least one surface of front and rear surfaces of the housing 100, and thus the electrode assembly 200 is supported by contact with the concave surface 110. In addition, an insertion end portion 210 of the electrode assembly 200 has a wedge shape.

Here, the accompanying drawings show an embodiment in which the concave surface 110 is formed in each of the front and rear surfaces of the housing 100. Although not shown in the drawings, as long as the concave surface 110 may be in contact with the electrode assembly 200 to support the electrode assembly 200, the concave surface 110 may be formed in only one surface of the front surface and the rear surface. The insertion end portion 210 of the electrode assembly 200 refers to one end portion forming a leading end when the electrode assembly 200 is inserted through the open upper surface of the housing 100. That is, the one end portion of the electrode assembly 200 that first enters an inner space of the housing 100 corresponds to the insertion end portion 210.

Since the insertion end portion 210 having the wedge shape can reduce the capacity of the electrode assembly 200, the insertion end portion 210 may be preferably formed to have an appropriate length so as to not be in contact with the concave surface 110 when the electrode assembly 200 is completely accommodated in the housing 100.

In the prismatic secondary battery 10 of the present disclosure, since a concave portion is formed in the front and/or rear surface of the housing 100, the electrode assembly 200 is supported by contact with the concave surface 110, and thus various problems such as damage to an electrode tab caused by the electrode assembly 200 moving in the housing 100 are prevented.

In addition, even when a swelling phenomenon in which the electrode assembly 200 swells occurs, the deformation of the housing 100 having improved structural rigidity due to the concave surface 110 is suppressed, thereby improving the safety of the prismatic secondary battery 10.

As the electrode assembly 200 has the insertion end portion 210 formed in a wedge shape, the risk that the electrode assembly 200 may be damaged by the concave surface 110 when the electrode assembly 200 is inserted into the housing 100, for example, the risk that a separator serving to insulate the electrode assembly 200 may be torn, is reduced, and thus the electrode assembly 200, which has the wedge-shaped insertion end portion 210, also considerably improves the safety of the prismatic secondary battery 10.

In one embodiment of the present disclosure, the concave surface 110 is formed in any one direction of a width direction W and a height direction H of the housing 100. The concave surface 110 is continuously formed from one end to the other end in any one direction of the width direction W and the height direction H. That is, the concave surface 110 is formed to be long over the entire central portion of the front and/or rear surface of the housing 100 in the width direction W or height direction H.

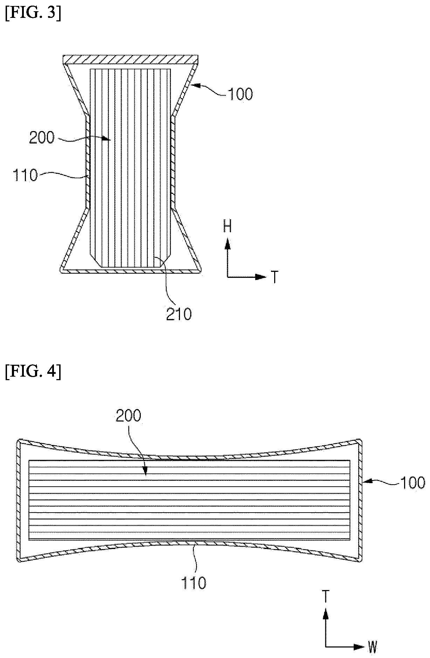

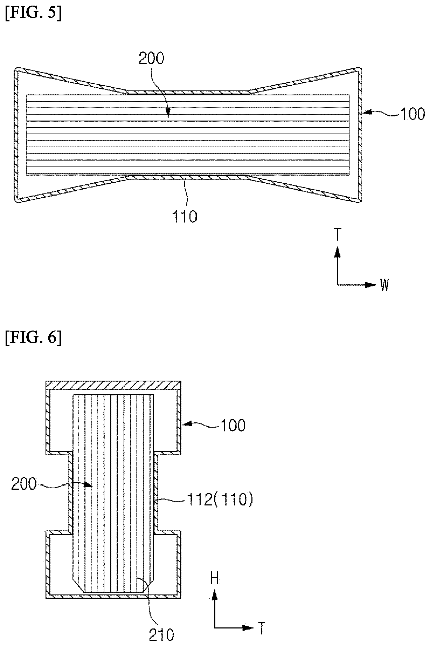

FIGS. 1 to 3 illustrate an example of an embodiment in which the concave surface 110 is formed in the width direction W of the housing 100, and FIGS. 4 and 5 illustrate an example of an embodiment in which the concave surface 110 is formed in the width direction W of the housing 100. Here, in the accompanying drawings, in order for the cross-sectional shape of the concave surface 110 to be clearly understood, FIGS. 2 and 3 illustrate a cross section in the height direction H, and FIGS. 4 and 5 illustrate a cross section in the width direction W.

As shown, the concave surface 110 may be formed curved or flat. The curved concave surface 110 is advantageous in that the curved concave surface 110 elastically supports the electrode assembly 200, and the flat concave surface 110 is advantageous in that a contact area with the electrode assembly 200 is widened.

The concave surface 110 in the embodiments of FIGS. 1 to 5 is connected to each of both ends in the height direction H or the width direction W, which intersects a direction in which the concave surface 110 extends, as a curved surface or a flat surface. That is, the concave surface 110 is gently connected to a peripheral edge as a curved surface or a flat surface. The gentle shape of the concave surface 110 is advantageous for plastic processing of the housing 100.

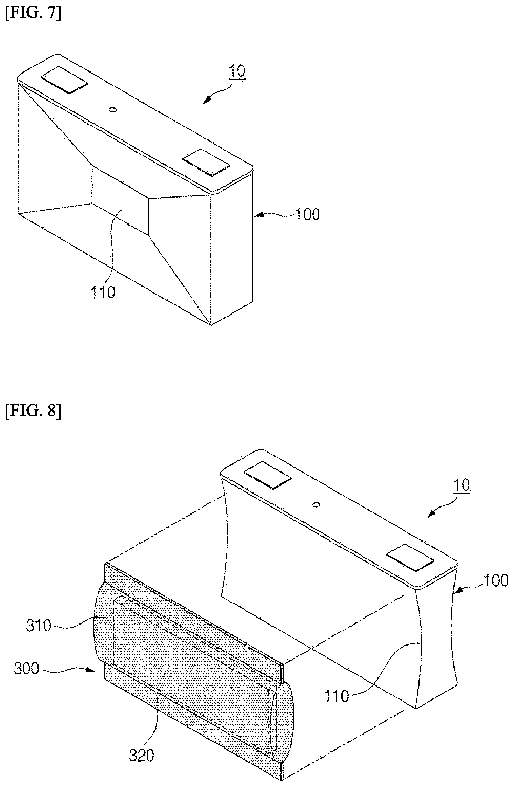

Meanwhile, the concave surface 110 provided in the prismatic secondary battery 10 of the present disclosure may have other modified shapes, and such modified embodiments are shown in FIGS. 6 and 7.

FIG. 6 illustrates an embodiment of the concave surface 110 formed as a stepped surface 112. An example of a housing in which the concave surface 110, which is the stepped surface 112, is formed in the width direction W of the housing 100 is shown. The concave stepped surface 112 including a curved step surface is in contact with an outer surface of the electrode assembly 200 to support the electrode assembly 200.

FIG. 7 illustrates a modified embodiment in which the concave surface 110 is formed in a central portion of at least one surface of the front and rear surfaces of the housing 100. That is, the concave surface 110 in FIG. 7 is not formed continuously from one end to the other end in any one direction of the width direction W and the height direction H of the housing 100, rather the central portion forms a concave surface.

Here, it may be preferable that the concave surface 110 have a structure connected to an edge of the housing 100 through a continuous inclined surface such that the concave surface 110 formed in the central portion may elastically support the electrode assembly 200. In other words, a surface profile of the concave surface 110 of FIG. 7 has a shape similar to a quadrangular frustum pyramid.

As described above, in the prismatic secondary battery 10 of the present disclosure, the electrode assembly 200 is supported by contact with the concave surface 110 formed in the housing 100 so that internal movement is suppressed. In addition, since the insertion end portion 210 of the electrode assembly 200 has the wedge shape, the risk of damage when the electrode assembly 200 is inserted into the housing 100 is reduced.

### [Second embodiment]

FIG. 8 is a view illustrating a prismatic secondary battery 10 according to a second embodiment of the present disclosure. The illustrated prismatic secondary battery 10 further include a heat absorber 300 disposed in an external space formed by a concave surface 110.

The heat absorber 300 is a component that promotes stable operation by absorbing heat generated from the prismatic secondary battery 10. In particular, the heat absorber 300 serves to delay a fire or explosion by effectively absorbing heat in an overheating situation such as thermal runaway or the like. In addition, the heat absorber 300 also performs a heat insulating function of suppressing heat transfer between adjacent batteries.

As described above, in the second embodiment of the present disclosure, by using the space of the concave surface 110 formed on a front and/or rear surface of the prismatic secondary battery 10, the heat absorber 300 may be disposed in the space to smoothly cool the prismatic secondary battery 10, thereby achieving effective cooling without additionally providing a separate cooling space.

In the illustrated second embodiment, an exterior material 310 of the heat absorber 300 is a pouch, and the pouch, which is the exterior material 310, seals an absorbent material 320 impregnated with a liquid that absorbs external heat and is vaporized.

Here, the absorbent material 320 impregnated with a liquid having a heat absorbing function may be an absorbent material 320 including a super absorbent matrix, for example, a super absorbent polymer (SAP) or a super absorbent fiber (SAF). The super absorbent matrix is porous or fibrous and exhibits a capillary action, and thus it is possible to absorb a large amount of liquid, and SAFs may be made into a fiber form, such as a nonwoven fabric, by processing SAPs.

In the present disclosure, specific types of the SAP and the SAF produced therefrom are not particularly limited, and any material having an excellent ability to absorb a fluid, particularly, water, may be used without limitation. Examples of the SAP may include at least one selected from the group consisting of polyacrylic acid, a polyacrylic salt, a polyacrylate graft polymer, starch, crosslinked carboxymethylated cellulose, an acrylic acid copolymer, a hydrolyzed starch-acrylonitrile graft copolymer, a starch-acrylic acid graft copolymer, a saponified vinyl acetate-acrylic acid ester copolymer, a hydrolyzed acrylonitrile copolymer, a hydrolyzed acrylamide copolymer, an ethylene-maleic anhydride copolymer, an isobutylene-maleic anhydride copolymer, polyvinylsulfonic acid, polyvinylphosphonic acid, polyvinyl phosphoric acid, polyvinyl sulfuric acid, sulfonated polystyrene, polyvinylamine, polydialkylaminoalkyl(meth)acrylamide, polyethyleneimine, polyallylamine, polyallylguanidine, polydimethyldiallylammonium hydroxide, a quaternized polystyrene derivative, guanidine-modified polystyrene, quaternized poly((meth)acrylamide, polyvinylguanidine, and a mixture thereof and may preferably include at least one selected from the group consisting of a crosslinked polyacrylic salt, crosslinked polyacrylic acid, and a crosslinked acrylic acid copolymer, but the present disclosure is not limited thereto.

The type of acrylic acid copolymer used as the SAP in the present disclosure is not particularly limited, but preferably, the acrylic acid copolymer may be a copolymer including at least one comonomer selected from the group consisting of an acrylic acid monomer, maleic acid, itaconic acid, acrylamide, 2-acrylamide-2-methylpropanesulfonic acid, 2-(meth)acryloylethanesulfonic acid, 2-hydroxyethyl(meth)acrylate, and styrenesulfonic acid.

In the present disclosure, the amount of water absorbed by the SAP may be in a range of 10 g/g to 500 g/g and preferably 50 g/g to 200 g/g, but the present disclosure is not limited thereto. That is, 10 g to 500 g of water, preferably, 50 g to 200 g, may be absorbed per 1 g of the SAP.

In the present disclosure, the duration of a cooling effect may be improved as the amount of water absorbed by the SAP is increased. However, when the amount of water absorbed by the SAP exceeds 500 g/g, since the fluidity of the SAP increases, it may be difficult to maintain a shape of the SAP, which makes effective cooling impossible, and when the amount of water absorbed by the SAP is less than 10 g/g, the duration of a cooling effect is too short, which makes it ineffective.

In one embodiment of the present disclosure, the liquid impregnated in the absorbent material 330 may be water. Water is a material with the highest specific heat and latent heat among readily available liquids. Therefore, since the water contained in the absorbent material 330 absorbs much heat during a process in which a temperature rises to the boiling point to cause a phase change to gas, water is suitable for application as a liquid accommodated in the heat absorber 300 of the present disclosure.

The present disclosure has been described above in more detail through the drawings and embodiments. However, the configurations described in the drawings or the embodiments in the specification are merely embodiments of the present disclosure and do not represent all the technical ideas of the present disclosure. Thus, it is to be understood that there may be various equivalents and variations that can replace them at the time of filing the present application.

### [Description of reference numerals]

| | | | |
|---|---|---|---|
| 10: | prismatic secondary battery | 100: | housing |
| 110: | concave surface | 112: | stepped surface |
| 200: | electrode assembly | 210: | insertion end portion |
| 300: | heat absorber | 310: | exterior material (pouch) |
| 320: | absorbent material | W: | width direction |
| H: | height direction | T: | thickness direction |

## Claims

1. A prismatic secondary battery, comprising:
a housing made of a metal and having a hexahedral shape; and
one or more electrode assemblies inserted through an open surface formed at an upper surface of the housing and accommodated in the housing,
wherein a concave surface is formed in at least one surface of a front surface or a rear surface of the housing,
wherein the one or more electrode assemblies are supported by contacting the concave surface in the housing, and
wherein an insertion end portion of the one or more electrode assemblies have a wedge shape.

2. The prismatic secondary battery of claim 1, wherein the concave surface is formed along a width direction or a height direction of the housing.

3. The prismatic secondary battery of claim 2, wherein the concave surface is continuously formed from one end to the other end of the housing.

4. The prismatic secondary battery of claim 3, wherein the concave surface is formed curved or flat.

5. The prismatic secondary battery of claim 4, wherein the concave surface is connected to both ends in the height direction or in the width direction of the housing, which intersects a direction in which the concave surface extends, as a curved surface or a flat surface.

6. The prismatic secondary battery of claim 4, wherein the concave surface is formed as a stepped surface.

7. The prismatic secondary battery of claim 1, wherein the concave surface is formed in a central portion of at least one surface of the front surface or the rear surface of the housing.

8. The prismatic secondary battery of claim 7, wherein the concave surface is connected to an edge of the housing through a continuous inclined surface.

9. The prismatic secondary battery of claim 1, wherein the insertion end portion of the one or more electrode assemblies are not in contact with the concave surface.

10. The prismatic secondary battery of claim 1, further comprising:
a heat absorber disposed in a space formed by the concave surface.

11. The prismatic secondary battery of claim 10, wherein an exterior material of the heat absorber is a pouch, and
wherein the pouch seals an absorbent material impregnated with a liquid that absorbs external heat and is vaporized.

12. The prismatic secondary battery of claim 11, wherein the absorbent material is a super absorbent matrix.

13. The prismatic secondary battery of claim 12, wherein the super absorbent matrix includes a super absorbent polymer (SAP) or a super absorbent fiber (SAF).
